# EUROPÄISCHE PATENTANMELDUNG

(11) **EP 4 545 350 A1**
(43) Veröffentlichungstag der Anmeldung: **30.04.2025**
(21) Anmeldenummer: 24207989.5
(22) Anmeldetag: 22.10.2024
(51) Int. Cl.: B60L 53/30, B60L 53/31, B60L 53/67, B60L 53/10

(54) **SCHNELLLADESTATION FÜR ELEKTROFAHRZEUGE**

(30) Priorität: 24.10.2023 DE 102023129261
(71) Anmelder: Compleo Charging Solutions GmbH & Co. KG, 58513 Lüdenscheid (DE)
(72) Erfinder: REISING, Viktor, 58706 Menden (DE); WOHLFAHRT, Thomas, 45721 Haltern am See (DE); RÖSLER, Philip, 44309 Dortmund (DE)
(74) Vertreter: Gottschald Patentanwälte Partnerschaft mbB

(57) **Zusammenfassung**

Die Erfindung betrifft eine Schnellladestation für Elektrofahrzeuge (2), wobei die Schnellladestation (1) mehrere Leistungsmodule (3) und mehrere Modulslots (4) aufweist, wobei die Leistungsmodule (3) im montierten Zustand in den Modulslots (4) angeordnet sind, wobei die Schnellladestation (1) eine Steuereinheit (5) aufweist, wobei die Schnellladestation (1) ein Kommunikationsnetzwerk (6) aufweist, wobei die Leistungsmodule (3) und die Steuereinheit (5) in das Kommunikationsnetzwerk (6) derart eingebunden sind, dass die Steuereinheit (5) und die Leistungsmodule (3) datentechnisch miteinander kommunizieren können. Es wird vorgeschlagen, dass den Leistungsmodulen (3) im Zuge einer Einrichtungsroutine jeweils eine individuelle Zuordnungsvariable (7) über eine, insbesondere manuelle, Eingabeanordnung (8) zugeteilt wird und dass die Steuereinheit (5) mit den Leistungsmodulen (3) individuell auf Grundlage der jeweiligen Zuordnungsvariable (7) innerhalb des Kommunikationsnetzwerks (6) kommuniziert.

## Beschreibung

Die vorliegende Erfindung betrifft eine Schnellladestation für Elektrofahrzeuge gemäß dem Oberbegriff von Anspruch 1 sowie ein Leistungsmodul für eine Schnellladestation gemäß dem Oberbegriff von Anspruch 7.

Schnellladestationen, auch bekannt als high performance charger, sind Gleichstromladestationen für Elektrofahrzeuge, insbesondere Automobile, aber auch Lastkraftfahrzeuge, Schiffe und dergleichen.

Bekannte Schnellladestationen weisen in der Regel mehrere Leistungsmodule auf, über welche eine entsprechende Leistung zum Aufladen eines mit der Schnellladestation verbundenen Elektrofahrzeugs bereitgestellt werden kann. Die Leistungsmodule sind im montierten Zustand in jeweils einem von mehreren Modulslots angeordnet. Die Anzahl an Modulslots begrenzt insoweit die Anzahl an Leistungsmodulen einer Schnellladestation.

Um die Leistungsmodule entsprechend ansteuern zu können, weist die Schnellladestation eine Steuereinheit und ein Kommunikationsnetzwerk auf. Sowohl die Steuereinheit als auch die Leistungsmodule sind in das Kommunikationsnetzwerk eingebunden, wodurch die Steuereinheit und die Leistungsmodule datentechnisch miteinander kommunizieren können. So lassen sich beispielsweise Steuerbefehle von der Steuereinheit an die Leistungsmodule übermitteln, um etwa eine bestimmte Leistung durch die jeweiligen Leistungsmodule abzugeben, oder Informationen von den Leistungsmodulen an die Steuereinheit übermitteln, um beispielsweise im Zuge einer Wartung gewisse Daten abgreifen zu können. Die datentechnische Kommunikation kann insoweit insbesondere bidirektional erfolgen.

Das Kommunikationsnetzwerk ist bei bekannten Schnellladestationen derart eingerichtet, dass eine individuelle Kommunikation zwischen der Steuereinheit und den Leistungsmodulen erfolgen kann. Die Steuereinheit kann also Daten gezielt zu einem der Leistungsmodule übermitteln oder aber Daten gezielt von einem der Leistungsmodule empfangen. Hierdurch lassen sich die Leistungsmodule etwa individuell ansteuern oder Informationen individuell abgreifen.

Obschon derartige Kommunikationsnetzwerke bereits heute bei den bekannten Schnellladestationen zum Einsatz kommen, so kann mit der Konfiguration eines derartigen Kommunikationsnetzwerks durchaus mit gewissen Herausforderungen einhergehen. So müssen -je nach Netzwerktopologie - etwa eine Vielzahl an Kommunikationswegen zwischen der Steuereinheit und jedem der Leistungsmodule eingerichtet werden, was mit einer vergleichsweisen aufwändigen Verkabelung einhergeht. Werden die Steuereinheit und die Leistungsmodule dahingegen beispielsweise in ein Bus-System eingebunden, so lässt sich zwar die Verkabelung innerhalb der Schnellladestation das Kommunikationsnetzwerk betreffend vereinfachen, jedoch müssen hier der Steuereinheit gewisse Kontaktinformationen der Leistungsmodule zwecks Kommunikation mitgeteilt werden. Bei bekannten Schnellladestationen ist es hierbei erforderlich, dass bei Installation und Austausch der Leistungsmodule diese Kontaktinformationen, beispielsweise in Form der Seriennummer oder einer Teilnehmeradresse, der Steuereinheit durch einen Techniker etwa über einen mit der Steuereinheit verbundenen Computer eingegeben werden. Über diese Kontaktinformationen kann im Anschluss die Steuereinheit individuell mit den Leistungsmodulen kommunizieren. Es ist leicht nachvollziehbar, dass, obschon die Eingabe der Kontaktinformationen grundsätzlich möglich ist, dies zum einen umständlich und zum anderen auch fehleranfällig sein kann. Denn so müssen beispielsweise vergleichsweise lange Zeichenfolgen, etwa Seriennummern, manuell eingegeben werden, die Zuordnung der Leistungsmodule zu den entsprechenden Modulslots beachtet werden und Fehler durch einen Einzelabgleich der langen Zeichenfolgen identifiziert werden.

Der Erfindung liegt vor diesem Hintergrund das Problem zugrunde, die bekannte Schnellladestation derart auszugestalten und weiterzubilden, dass die Installation und der Austausch der Leistungsmodule, insbesondere hinsichtlich deren Einbindung in das Kommunikationsnetzwerk, vereinfacht wird.

Das obige Problem wird durch die Merkmale des kennzeichnenden Teils von Anspruch 1 gelöst.

Wesentlich ist die grundsätzliche Überlegung, dass im Zuge einer Einrichtungsroutine jedem der Leistungsmodule eine individuelle, also eindeutige, Zuordnungsvariable zugeteilt wird. Die Zuteilung erfolgt dabei über eine Eingabeanordnung, insbesondere manuell, beispielsweise durch einen Techniker, und insbesondere steuerungseinheitsunabhängig. Auf Grundlage der jeweiligen Zuordnungsvariable ist es dann möglich, dass die Steuereinheit mit den Leistungsmodulen individuell kommuniziert. Während es im Stand der Technik erforderlich ist bei Installation und Austausch eines oder mehrerer Leistungsmodule die entsprechenden Kontaktinformationen, wie etwa die Seriennummer, in die Steuereinheit vergleichsweise aufwändig und insbesondere fehleranfällig einzugeben, so ist dies bei der vorschlagsgemäßen Schnellladestation nicht erforderlich, da hier die Zuordnungsvariablen direkt den Leistungsmodulen zugeteilt und zumindest nicht manuell in die Steuereinheit eingegeben werden. Die Zuordnungsvariablen stellen dann eine Art von Kontaktinformationen dar, welche der Steuereinheit bereits vorab, etwa von Werk aus, bekannt sein können und entsprechend nicht mitgeteilt werden müssen oder, welche der Steuereinheit in vereinfachter Form, etwa in Form einer Zuteilungsregel, mit vergleichsweise wenig Aufwand, insbesondere durch den Techniker, mitgeteilt werden können. Dem Grunde nach bedeutet dies, dass die Zuordnungsvariablen nach einer Art Schema oder Regel, welches bzw. welche der Steuereinheit bekannt ist oder, insbesondere einmalig, mitgeteilt wird, den Leistungsmodulen zugeteilt werden, so dass die Steuereinheit quasi von sich aus die Zuordnungsvariablen kennt oder zumindest auf diese schließen kann.

Im Einzelnen wird vorgeschlagen, dass den Leistungsmodulen im Zuge einer Einrichtungsroutine jeweils eine individuelle Zuordnungsvariable über eine, insbesondere manuelle, Eingabeanordnung zugeteilt wird und dass die Steuereinheit mit den Leistungsmodulen individuell auf Grundlage der jeweiligen Zuordnungsvariable innerhalb des Kommunikationsnetzwerks kommuniziert.

Eine weitere vorteilhafte Ausgestaltung gemäß Anspruch 2 sieht vor, dass der Steuereinheit die Belegung der Modulslots mitgeteilt wird und die Zuordnung der Zuordnungsvariablen nach einer bestimmten Zuordnungsregel erfolgt. Dies kann die Einbindung der Leistungsmodule weiter vereinfachen, da insbesondere die Steuereinheit mit der Belegungsinformation, also welche Modulslots belegt sind, und mit der Zuordnungsregel, also nach welcher Regel den Leistungsmodulen eine Zuordnungsvariable zugeteilt wird, ohne Weiteres feststellen kann, welches Leistungsmodul in welchem Modulslot angeordnet ist. Eine manuelle Eingabe dieser Information ist insoweit nicht erforderlich. Eine besonders einfache Einbindung kann etwa erfolgen, indem die Zuordnungsregel die relative Reihenfolge der Leistungsmodule in den Modulslots betrifft. Beispielsweise werden den Leistungsmodulen hierbei die Zuordnungsvariablen von links nach rechts in aufsteigender Reihenfolge, also etwa a, b, c etc. oder 0, 1, 2, 3 etc., zugeteilt.

Anspruch 3 betrifft zwei vorteilhafte Ausgestaltungen, bei welchen die Kommunikation der Steuereinheit und der Leistungsmodule weitergebildet ist. Sofern die Leistungsmodule individuell über die jeweilige Zuordnungsvariable angesprochen werden, ist eine besonders vereinfachte Kommunikation über das Kommunikationsnetzwerk gegeben. Die Zuordnungsvariable stellt hier sozusagen eine Art Kommunikationsadresse innerhalb des Kommunikationsnetzwerks dar.

Um Fehler bei der Zuteilung der Zuordnungsvariablen leichter erkennen zu können, sieht eine weitere vorteilhafte Ausgestaltung gemäß Anspruch 4 eine Anzeigeanordnung vor, über welche die Zuordnungsvariablen der Leistungsmodule angezeigt werden. Es kann etwa ein Monitor, o.ä. vorgesehen sein, welcher sämtliche Zuordnungsvariable der Leistungsmodule anzeigt. Eine weitere vorzugsweise Ausgestaltung sieht jedoch mehrere Anzeigeeinheiten, also etwa mehrere Monitore, Segmentanzeigen, o.ä., vor, welche jeweils einem der Leistungsmodule zugeordnet ist und die jeweilige Zuordnungsvariable anzeigen. Hierdurch können sich Fehler in der Zuordnung noch einfacher identifizieren lassen, insbesondere da diese einem Techniker direkt "ins Auge springen". Um eine eindeutige Zuteilung der Anzeigeeinheiten und der Leistungsmodule zu erreichen, können die Anzeigeeinheiten jeweils als Teil eines der Leistungsmodule ausgebildet oder jeweils an einem der Modulslots angeordnet sein.

Anspruch 5 betrifft vorteilhafte Ausgestaltungen die Eingabeanordnung betreffend. So kann eine Eingabeeinheit vorgesehen sein, über welche die Zuordnungsvariablen eingebbar sind, indem die Leistungsmodule mit der Eingabeeinheit verbunden und die Zuordnungsvariable manuell durch einen Techniker eingegeben werden. Die Eingabeeinheit kann etwa eine externe Eingabeeinheit sein, so dass in diesem Fall die Schnellladestation selbst keine solche aufweist. Besonders vorzugsweise ist es so, dass die Eingabeanordnung mehrere Eingabeeinheiten aufweist, von denen jeweils eine Eingabeeinheit einem der Leistungsmodule zugeordnet ist. Dies kann die Eingabe weiter vereinfachen. Die Eingabeeinheiten können dabei jeweils als Teil eines der Leistungsmodule ausgebildet oder an einem der Modulslots angeordnet sein, um eine eindeutige Zuordnung der Eingabeeinheiten und der Leistungsmodule zu erreichen.

Nach einer weiteren vorteilhaften Ausgestaltung gemäß Anspruch 6 ist vorgesehen, dass das Kommunikationsnetzwerk ein Bus-System aufweist, bei welchem sich die Einbindung der Leistungsmodule als besonders vereinfacht herausgestellt hat.

Nach einer weiteren Lehre gemäß Anspruch 7, der eigenständige Bedeutung zukommt, wird ein Leistungsmodul für eine Schnellladestation beansprucht. Die Schnellladestation kann insbesondere eine vorschlagsgemäße Schnellladestation sein. Das Leistungsmodul ist in einem Modulslot der Schnellladestation anordbar und in ein Kommunikationsnetzwerk der Schnellladestation einbindbar.

Dabei ist wesentlich, dass dem Leistungsmodul im Zuge einer Einrichtungsroutine eine individuelle Zuordnungsvariable über eine, insbesondere manuelle, Eingabeanordnung zuteilbar ist und dass das Leistungsmodul über die Zuordnungsvariable innerhalb des Kommunikationsnetzwerks ansprechbar ist und dass das Leistungsmodul eine Anzeigeeinheit zur Anzeige der Zuordnungsvariable aufweist.

Auf alle Ausführungen zu der vorschlagsgemäßen Schnellladestation darf verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße Schnellladestation und ein an die Schnellladestation angeschlossenes Elektrofahrzeug in perspektivischer Ansicht und
- Fig. 2: die vorschlagsgemäße Schnellladestation gemäß Fig. 1, bei welcher das Innere der Schnellladestation einsehbar ist, in einer Vorderansicht.

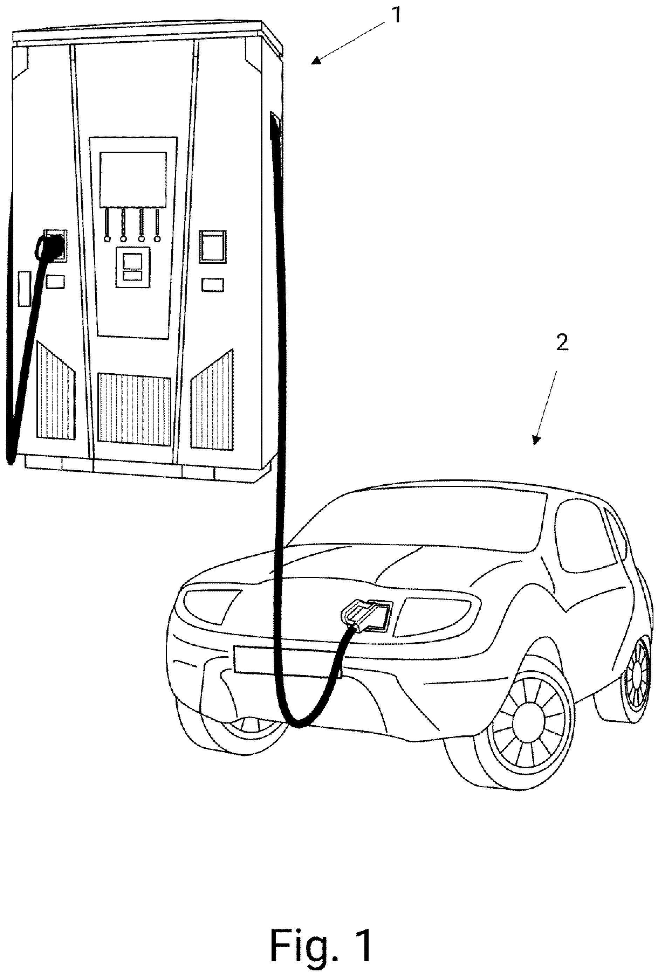

Das in den Figuren dargestellte und insoweit bevorzugte Ausführungsbeispiel betrifft eine Schnellladestation 1 für Elektrofahrzeuge 2. Wie exemplarisch in Fig. 1 abgebildet, ist durch die Schnellladestation 1 ein Elektrofahrzeug 2, wie hier und vorzugsweise ein Automobil, ein Lastkraftfahrzeug, ein Schiff oder dergleichen, aufladbar. Die Schnellladestation 1 kann insbesondere im öffentlichen Raum eingesetzt werden, was diese u.a. von sogenannten im privaten Bereich eingesetzten "Wallboxen" unterscheidet. Die Schnellladestation 1 kann etwa, wie in Fig. 1 angedeutet, fest im Boden verankert sein. Die Schnellladestation 1 kann insbesondere Gleichstrom anbieten, so dass das Aufladen des Elektrofahrzeugs 2 zügiger erfolgen kann, was letztlich zu kürzeren Aufladezeiten, etwa im Vergleich zu AC-Ladestationen, wie Wallboxen, führt.

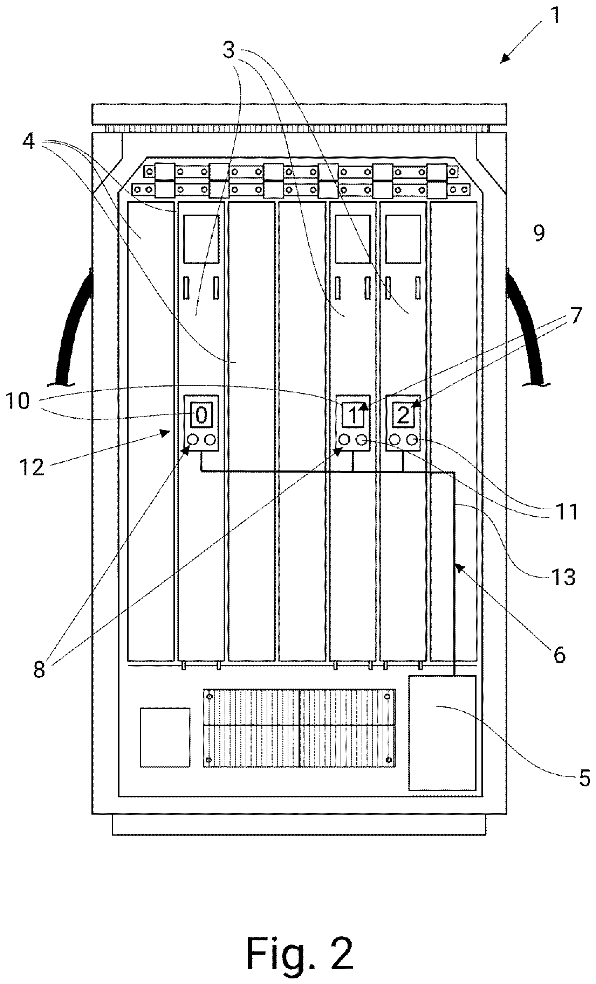

Die Schnellladestation 1 weist mehrere Leistungsmodule 3 auf. Jedes der Leistungsmodule 3 kann eine entsprechende Leistung zum Aufladen des mit der Schnellladestation 1 verbundenen Elektrofahrzeugs 2 (Fig.1) bereitstellen. Die Leistungsmodule 3 stellen jeweils einen Teil der Gesamtleistung der Schnellladestation 1 zur Verfügung, beispielsweise jeweils 30 kW. Es ist vorzugsweise so, dass die mehreren Leistungsmodule 3 gemeinsam mindestens 150 kW, vorzugsweise mindestens 175 kW, weiter vorzugsweise mindestens 200 kW Leistung stellen. Die Leistungsmodule 3 können jeweils eine Leistungselektronik, insbesondere einen Stromwandler, aufweisen, welche die Wandlung einer eingehenden, insbesondere dreiphasigen, Wechselspannung in eine ausgehende Gleichspannung ermöglicht. Aus Fig. 2 ersichtlich und beispielhaft weist die Schnellladestation 1 drei Leistungsmodule 3 auf, wobei auch eine von drei abweichende Anzahl an Leistungsmodulen 3, insbesondere mindestens zwei, vorzugsweise mindestens vier und/oder höchstens neun, weiter vorzugsweise genau sechs, sieben oder acht, denkbar sind.

Die Schnellladestation 1 weist ferner mehrere Modulslots 4 auf. Die Leistungsmodule 3 sind im montierten Zustand, wie etwa aus Fig. 2 hervorgeht, in den Modulslots 4 angeordnet. Dabei ist jeweils ein Leistungsmodul 3 in jeweils einem der Modulslots 4 angeordnet. Es ist möglich, dass die Leistungsmodule 3 austauschbar in den Modulslots 4 angeordnet sind, um etwa bei Defekt ausgetauscht werden zu können. Es ist möglich, dass in jedem der Modulslots 4 ein Leistungsmodul 3 angeordnet ist, oder dass, wie hier, nur in einem Teil der Modulslots 4 jeweils ein Leistungsmodul 3 angeordnet ist.

Die Schnellladestation 1 weist neben den Leistungsmodulen 3 und den Modulslots 4 eine Steuereinheit 5 auf. Über die Steuereinheit 5 können etwa die Leistungsmodule 3 zur Bereitstellung der entsprechenden Leistung angesteuert werden. Auch andere Funktionen der Schnellladestation 1 können über die Steuereinheit 5 steuerbar sein. Derartige Funktionen können etwa Mitteilungsfunktionen, beispielsweise zur Mitteilung von Sollvorgaben, insbesondere hinsichtlich des Stroms oder der Spannung, und/oder Betriebsfunktionen, Selbsttestfunktion, Abschaltfunktionen, Schutzfunktionen oder ähnliches umfassen.

Um unter anderem die Ansteuerung der Leistungsmodule 3 durch die Steuereinheit 5 zu ermöglichen, sind die Steuereinheit 5 und die Leistungsmodule 3 datentechnisch miteinander verbunden. Die Schnellladestation 1 weist hierfür ein Kommunikationsnetzwerk 6 auf. Die Leistungsmodule 3 und die Steuereinheit 5 sind in das Kommunikationsnetzwerk 6 derart eingebunden, dass die Steuereinheit 5 und die Leistungsmodule 3 datentechnisch miteinander kommunizieren können. Neben etwaigen Steuerbefehlen von der Steuereinheit 5 an die Leistungsmodule 3 können über das Kommunikationsnetzwerk 6 auch sonstige Daten, also etwa Befehle und Informationen, austauschbar sein. Es ist insbesondere möglich, dass das Kommunikationsnetzwerk 6 eine bidirektionale Kommunikation zwischen der Steuereinheit 5 und den Leistungsmodulen 3 ermöglicht. Es können also sowohl Daten, wie Befehle und Informationen, von der Steuereinheit 5 zu den Leistungsmodulen 3 als auch Daten, wie Befehle und Informationen, von den Leistungsmodulen 3 zu der Steuereinheit 5 kommuniziert werden.

Wesentlich bei der vorschlagsgemäßen Schnellladestation 1 ist nun, dass den Leistungsmodulen 3 im Zuge einer Einrichtungsroutine jeweils eine individuelle Zuordnungsvariable 7 über eine, insbesondere manuelle, Eingabeanordnung 8 zugeteilt wird und dass die Steuereinheit 5 mit den Leistungsmodulen 3 individuell auf Grundlage der jeweiligen Zuordnungsvariable 7 innerhalb des Kommunikationsnetzwerks 6 kommuniziert, insbesondere dass die Steuereinheit 5 die Leistungsmodule 3 individuell auf Grundlage der jeweiligen Zuordnungsvariable 7 innerhalb des Kommunikationsnetzwerks 6 ansteuert.

Die Einrichtungsroutine kann insbesondere bei Installation und/oder Austausch eines oder mehrerer der Leistungsmodule 3 erfolgen. Die Einrichtungsroutine kann hierbei etwa durch einen Techniker initiiert und vorgenommen werden. Die Einrichtungsroutine ist, hier und vorzugsweise, eine spezifische Einrichtungsroutine, welche im Zuge der Installation und/oder einer Wartung der Schnellladestation 1, insbesondere während der Fertigung oder am Einsatzort, erfolgt.

Im Zuge der Einrichtungsroutine wird jedem Leistungsmodul 3 eine individuelle Zuordnungsvariable 7 zugeteilt. Das Zuteilen der jeweiligen Zuordnungsvariable 7 kann zeitlich vor und/oder nach der Anordnung des jeweiligen Leistungsmoduls 3 in einem der Modulslots 4 erfolgen. "Individuell" im Zusammenhang mit der Zuordnungsvariable 7 bedeutet, dass die zugeteilten Zuordnungsvariablen 7 der Leistungsmodule 3 der Schnellladestation 1 voneinander unterschiedlich sind und damit jedem Leistungsmodul 3 eine eindeutige Zuordnungsvariable 7 zugeteilt wird. "Zugeteilt" in diesem Zusammenhang bedeutet, dass die jeweilige Zuordnungsvariable 7 eingestellt und dem jeweiligen Leistungsmodul 3 mitgeteilt oder mitteilbar ist. Es ist insoweit vorgesehen, dass jedes Leistungsmodul 3 nach erfolgtem Zuteilen die jeweilige, also zugeteilte, Zuordnungsvariable 7 kennt oder aber zumindest bedarfsweise ohne Weiteres abfragen kann.

Das Zuteilen über die Eingabeanordnung 8 erfolgt insbesondere steuerungseinheitsunabhängig. Das Zuteilen erfolgt insoweit unabhängig von der Steuereinheit 5. Es ist möglich, dass die Eingabeanordnung 8 unabhängig von der Steuereinheit 5 ausgebildet ist. Die Eingabeanordnung 8 ist insbesondere manuell, so dass etwa ein Techniker die Zuordnungsvariablen 7 der Leistungsmodule 3 eingibt. Es ist denkbar, dass dies direkt, beispielsweise über ein Nummernfeld o. ä., oder indirekt erfolgt, beispielsweise über einen oder mehrere Taster, dessen oder deren Betätigung hinterlegte Zuordnungsvariablen 7 durchschaltet.

Auf Grundlage der jeweiligen Zuordnungsvariable 7 kann die Steuereinheit 5 mit den Leistungsmodulen 3 individuell kommunizieren. Dies kann insbesondere im montierten Zustand der Leistungsmodule 3 in den Modulslots 4 erfolgen, also insbesondere sobald die Leistungsmodule 3 in den Modulslots 4 angeordnet sind und möglicherweise angeschlossen sind. "Individuell" im Zusammenhang mit der Kommunikation bedeutet, dass Daten, etwa Befehle und Informationen, von der Steuereinheit 5 an ein bestimmtes Leistungsmodul 3 kommuniziert werden können sowie von einem bestimmten Leistungsmodul 3 an die Steuereinheit 5 kommuniziert und durch die Steuereinheit 5 eindeutig zugeordnet werden können. Es geht dem Grunde nach darum, dass jedes der Leistungsmodule 3 durch die Steuereinheit 5 gezielt ansteuerbar ist.

Während für gewisse Befehle und insbesondere auch den Austausch von gewissen Informationen bereits die individuelle Kommunikation zwischen der Steuereinheit 5 und den Leistungsmodulen 3 ausreichend ist, so ist es für gewisse Befehle und ggf. für den Austausch von gewissen Informationen erforderlich, dass der Steuereinheit 5 bekannt ist, welches der Leistungsmodule 3 in welchem der Modulslots 4 angeordnet ist.

So ist es beispielsweise denkbar, dass die Schnellladestation 1 eine Schaltmatrix aufweist. Die Schaltmatrix ist über die Steuereinheit 5 schaltbar, insbesondere derart, dass die zur Verfügung gestellte Leistung der Leistungsmodule 3, beispielsweise für einen Ladevorgang des Elektrofahrzeugs 2, entlang eines bestimmten Leistungspfades abgebbar ist. Neben dem Steuerbefehl der Steuereinheit 5 an einen Teil der Leistungsmodule 3 muss hier folglich auch die Schaltmatrix entsprechend geschaltet werden. Damit dies erfolgen kann, ist es erforderlich, dass der Steuereinheit 5 bekannt ist, welches der Leistungsmodule 3 mit der jeweiligen Zuordnungsvariable 7 in welchem der Modulslots 4 angeordnet ist. Die Beziehung der Modulslots 4 und der Schaltmatrix ist der Steuereinheit 5 bekannt.

Es ist, insbesondere vor diesem Hintergrund, besonders vorteilhaft, wenn der Steuereinheit 5 im Zuge der Einrichtungsroutine die Belegung der Modulslots 4 mitgeteilt wird und wenn die Zuordnungsvariablen 7 den Leistungsmodulen 3 im Zuge der Einrichtungsroutine nach einer bestimmten Zuordnungsregel zugeteilt werden. Die Zuordnungsregel ist der Steuereinheit 5 entweder bekannt, etwa da diese im Zuge einer Ersteinrichtung der Steuereinheit 5 hinterlegt wurde, oder wird der Steuereinheit 5 im Zuge der Einrichtungsroutine mitgeteilt, insbesondere manuell, beispielsweise durch einen Techniker.

Das Mitteilen der Belegung der Modulslots 4 erfolgt im Zuge der Einrichtungsroutine insbesondere ausschließlich leistungsmodulunspezifisch. Das Mitteilen erfolgt also insbesondere derart, dass der Steuereinheit 5 mitgeteilt wird, welche Modulslots 4 belegt sind und/oder welche Modulslots 4 frei sind. Nicht mitgeteilt wird die Information, welches der Leistungsmodule 3 in welchem der Modulslots 4 angeordnet ist. Dies ist auch nicht erforderlich, da die Steuereinheit 5 auf Grundlage der bestimmten Zuordnungsregel und der Information, welche der Modulslots 4 belegt sind, ohne Weiteres auf diese Information rückschließen kann.

In Fig. 2 beispielsweise wird der Steuereinheit 5 mitgeteilt, dass (von in der Darstellung links nach rechts) in dem zweiten, fünften und sechsten der Modulslots 4 jeweils eines der Leistungsmodule 3 angeordnet ist. Hier und vorzugsweise betrifft die Zuordnungsregel die relative Reihenfolge der Leistungsmodule 3 in den Modulslots 4. Die Zuordnungsregel besagt in diesem Fall beispielsweise, dass den Leistungsmodulen 3 von links nach rechts aufsteigende Zahlen zugeordnet werden. Gemäß Fig. 2 erfolgt dies derart, dass dem in der Darstellung links angeordneten Leistungsmodul 3 die "0" als Zuordnungsvariable 7, dem mittig angeordneten Leistungsmodul 3 die "1" und dem rechts angeordneten Leistungsmodul 3 die "2" zugeteilt wurde. Ganz allgemein gibt die Zuordnungsregel im Ergebnis vor, wie und nach welcher Regel den Leistungsmodulen 3 im Zuge der Einrichtungsroutine welche Zuordnungsvariable 7 zuzuteilen ist bzw. zugeteilt wird. Auf Grundlage der Zuordnungsregel (hier: relative Reihenfolge der Leistungsmodule 3) und mit der Information, in welchen der Modulslots 4 Leistungsmodule 3 angeordnet sind, kann die Steuereinheit 5 darauf rückschließen, dass gemäß Fig. 2 (von in der Darstellung links nach rechts) in dem zweiten der Modulslots 4 das Leistungsmodul 3 mit der Zuordnungsvariable 7 "0", in dem vierten Modulslot 4 das Leistungsmodul 3 mit der Zuordnungsvariable 7 "1" und in dem fünften Modulslots 4 das Leistungsmodul 3 mit der Zuordnungsvariable 7 "2" angeordnet ist.

Ganz grundsätzlich kann die Steuereinheit 5 mit den Leistungsmodulen 3 auf unterschiedliche Art und Weise auf Grundlage der jeweiligen Zuordnungsvariable 7 kommunizieren. So ist es etwa vorzugsweise möglich, dass die Steuereinheit 5 mit den Leistungsmodulen 3 individuell auf Grundlage der jeweiligen Zuordnungsvariable 7 innerhalb des Kommunikationsnetzwerks 6 kommuniziert, indem das jeweilige Leistungsmodul 3 zumindest zeitweise über die jeweilige Zuordnungsvariable 7 angesprochen wird. In diesem Fall entspricht die Zuordnungsvariable 7 etwa einer Adresse oder einem Teil einer Adresse im Kommunikationsnetzwerk 6, über welche Daten, also etwa Befehle und Informationen, an das jeweilige Leistungsmodul 3 adressiert werden können. Alternativ ist es in diesem Fall denkbar, dass die Zuordnungsvariable 7 jeweils einer CAN-ID oder zumindest einem Teil einer CAN-ID entspricht. Das Kommunikationsnetzwerk 6 kann ein CAN-Bus-System aufweisen, über welches die Steuereinheit 5 mittels der jeweiligen CAN-ID und damit auf Grundlage der jeweiligen Zuordnungsvariable 7 individuell mit den Leistungsmodulen 3 kommuniziert.

Neben dieser Möglichkeit, bei welcher die Zuordnungsvariable 7 zumindest einem Teil einer Adresse oder einer CAN-ID entspricht, ist es grundsätzlich ebenso denkbar, dass die Steuereinheit 5 den Leistungsmodulen 3 jeweils eine individuelle Kennung zuordnet und dass die Kennungen der Leistungsmodule 3 mit den jeweiligen Zuordnungsvariablen 7 datentechnisch verknüpft sind und dass die Steuereinheit 5 mit den Leistungsmodulen 3 individuell auf Grundlage der jeweiligen Zuordnungsvariable 7 innerhalb des Kommunikationsnetzwerks 6 kommuniziert, indem das jeweilige Leistungsmodul 3 zumindest zeitweise über die jeweilige Kennung angesprochen wird. Aufgrund der datentechnischen Verknüpfung zwischen der Kennung und der Zuordnungsvariablen 7 erfolgt die Kommunikation zwischen der Steuereinheit 5 und den Leistungsmodulen 3 weiterhin auf Grundlage der Zuordnungsvariablen 7. Es ist hinsichtlich der datentechnischen Verknüpfung denkbar, dass die individuellen Kennungen von den Zuordnungsvariablen 7 abgeleitet sind. Beispielsweise lässt sich jeweils eine CAN-ID aus einer der Zuordnungsvariablen 7 ableiten und die Kommunikation erfolgt sodann, wie vorstehend beschrieben, mit dem CAN-Bus-System.

Alternativ ist es hinsichtlich der datentechnischen Verknüpfung auch denkbar, dass die individuellen Kennungen den Zuordnungsvariablen 7 zugeordnet werden. In diesem Fall kann beispielsweise durch die Steuereinheit 5 jeweils eine individuelle Kennung den Leistungsmodulen 3 zugeordnet werden. Anschließend werden die Zuordnungsvariablen 7 abgefragt, indem die Steuereinheit 5 die Leistungsmodule 3 über die individuelle Kennung abfragt und so die Zuordnungsvariablen 7 von den Leistungsmodulen 3 erfährt.

Im Zusammenhang mit der Zuteilung der Zuordnungsvariablen 7 hat es sich als besonders vorteilhaft herausgestellt, wenn die Schnellladestation 1 eine Anzeigeanordnung 9 aufweist, über welche zumindest im Zuge der Einrichtungsroutine die Zuordnungsvariablen 7 der Leistungsmodule 3 angezeigt werden. Die Anzeigeanordnung 9 kann etwa eine einzelne Anzeigeeinheit 10, wie einen Monitor, aufweisen, über welche sich alle Zuordnungsvariablen 7 der Leistungsmodule 3 zeitgleich oder wechselnd anzeigen lassen. Besonders vorteilhaft ist jedoch vorgesehen, dass die Anzeigeanordnung 9 mehrere Anzeigeeinheiten 10 aufweist, von denen jeweils eine der Anzeigeeinheiten 10 einem der Leistungsmodule 3 zugeordnet ist. "Zugeordnet" in diesem Zusammenhang bedeutet, dass über die jeweilige Anzeigeeinheit 10 die Zuordnungsvariable 7 des jeweiligen Leistungsmoduls 3 anzeigbar ist. Ganz allgemein können die Anzeigeeinheiten 10 jeweils als Monitor oder, besonders bevorzugt, als Segmentanzeige ausgebildet sein. Als Segmentanzeige ausgebildete Anzeigeeinheiten 10 können günstig und vergleichsweise energiesparsam sein.

Jeweils eine der Anzeigeeinheiten 10 kann vorzugsweise einem der Leistungsmodule 3 zugeordnet sein, indem jeweils eine der Anzeigeeinheiten 10 als Teil eines der Leistungsmodule 3 ausgebildet ist, wie es bei dem Ausführungsbeispiel gemäß Fig. 2 der Fall ist. Dies kann unter anderem den Vorteil haben, dass die Zuordnungsvariable 7 auch im demontierten Zustand eines der Leistungsmodule 3 anzeigbar sein kann. Eine gesonderte Zuordnung, welche ggf. weitere Arbeitsschritte im Zuge der Installation oder des Austauschs des Leistungsmoduls 3 erfordern würde, ist in diesem Fall nicht erforderlich.

Alternativ hierzu ist es ebenso denkbar, dass jeweils eine der Anzeigeeinheiten 10 einem der Leistungsmodule 3 zugeordnet ist, indem jeweils eine der Anzeigeeinheiten 10 an einem der Modulslots 4 angeordnet ist. In diesem Fall erfolgt die Zuordnung im Zuge der Anordnung der Leistungsmodule 3 in den Modulslots 4.

Ebenfalls im Zusammenhang mit der Zuteilung der Zuordnungsvariablen 7 hat es sich als vorzugsweise herausgestellt, wenn die Eingabeanordnung 8 eine Eingabeeinheit 11 aufweist, welche im Zuge der Einrichtungsroutine mit den Leistungsmodulen 3, insbesondere nacheinander, verbunden wird. Beispielsweise kann die Eingabeanordnung 8 mehrere Einlässe aufweisen, welche jeweils einem der Leistungsmodule 3 zugeordnet sind und mit welchen die Eingabeeinheit 11 nacheinander verbunden, insbesondere eingesteckt, wird. Die Eingabeeinheit 11 kann als interne Eingabeeinheit 11, welche der Schnellladestation 1 zugeordnet ist, oder aber als externe Eingabeeinheit 11, welche beispielsweise von einem Techniker im Zuge einer Wartung für mehrere verschiedene Schnellladestationen 1 eingesetzt wird, ausgebildet sein. Ganz allgemein kann insoweit die Eingabeanordnung 8 teilweise oder vollständig der Schnellladestation 1 zugeordnet sein.

Alternativ hierzu und besonders vorzugsweise ist jedoch vorgesehen, dass die Eingabeanordnung 8 mehrere Eingabeeinheiten 11 aufweist, von denen jeweils eine der Eingabeeinheiten 11 einem der Leistungsmodule 3 zugeordnet ist. In diesem Fall sind die Eingabeeinheiten 11 als interne Eingabeeinheiten 11 ausgebildet, welche der Eingabeanordnung 8 zugeordnet sind. Hier und vorzugsweise lässt sich über eine der Eingabeeinheiten 11, insbesondere genau, eine der Zuordnungsvariablen 7 im Zuge der Einrichtungsroutine zuteilen. Die Eingabeeinheiten 11 können insbesondere eine oder mehrere Tasten und/oder ein Nummernfeld zur manuellen Eingabe einer Zuordnungsvariable 7 aufweisen.

In diesem Zusammenhang kann vorgesehen sein, dass jeweils eine der Eingabeeinheiten 11 einem der Leistungsmodule 3 zugeordnet ist, indem jeweils eine der Eingabeeinheiten 11 als Teil eines der Leistungsmodule 3 ausgebildet ist. Dies ist bei dem Ausführungsbeispiel der Fig. 2 der Fall. Alternativ ist es ebenso denkbar, dass jeweils eine der Eingabeeinheiten 11 einem der Leistungsmodule 3 zugeordnet ist, indem jeweils eine der Eingabeeinheiten 11 an einem der Modulslots 4 angeordnet ist. Hierbei kann die jeweilige Eingabeeinheit 11 mit dem jeweiligen Leistungsmodul 3 im Zuge der Montage eines der Leistungsmodule 3 in einem der Modulslots 4 verbunden werden.

Wie aus Fig. 2 ersichtlich und vorzugsweise ist vorgesehen, dass jeweils eine der Anzeigeeinheiten 10 und jeweils eine Eingabeeinheit 11 eine gemeinsame Anzeige-Eingabe-Einheit 12 ausbilden. Die Anzeige-Eingabe-Einheiten 12 können vormontierbar sein und jeweils als Montageeinheit im Zuge der Fertigung der Leistungsmodule 3 anordbar sein.

Hinsichtlich des Kommunikationsnetzwerks 6 hat es sich als vorzugsweise herausgestellt, dass das Kommunikationsnetzwerk 6 ein Bus-System 13 zur Kommunikation der Steuereinheit 5 und der Leistungsmodule 3 aufweist. Dies ist gemäß Fig. 2 der Fall. Das Bus-System 13 kann insbesondere als CAN-Bus-System ausgebildet sein.

Es ist in diesem Zusammenhang denkbar, dass jeweils auf Grundlage der Zuordnungsvariable 7 eine CAN-ID abgeleitet wird. Über die jeweilige CAN-ID können innerhalb des Kommunikationsnetzwerks 6 Daten, also etwa Befehle und Informationen, zwischen der Steuereinheit 5 und dem jeweiligen Leistungsmodul 3 ausgetauscht werden. Alternativ ist es auch denkbar, dass die Zuordnungsvariablen 7 jeweils eine CAN-ID selbst oder zumindest ein Teil der CAN-ID sind.

Neben der Schnellladestation 1 wird darüber hinaus ein Leistungsmodul 3 für eine Schnellladestation 1, insbesondere einer vorschlagsgemäßen Schnellladestation 1, vorgeschlagen. Das Leistungsmodul 3 ist derart ausgebildet, dass dieses in einem Modulslot 4 der Schnellladestation 1 anordbar und in ein Kommunikationsnetzwerk 6 der Schnellladestation 1 einbindbar ist.

Wesentlich bei dem Leistungsmodul 3 ist, dass dem Leistungsmodul 3 im Zuge einer Einrichtungsroutine eine individuelle Zuordnungsvariable 7 über eine, insbesondere manuelle, Eingabeanordnung 8 zuteilbar ist und dass das Leistungsmodul 3 über die Zuordnungsvariable 7 innerhalb des Kommunikationsnetzwerks 6 ansprechbar ist und dass das Leistungsmodul 3 eine Anzeigeeinheit 10 zur Anzeige der Zuordnungsvariable 7 und/oder zumindest einen Teil einer, insbesondere manuellen, Eingabeanordnung 8 zum Zuteilen der Zuordnungsvariable 7 aufweist.

Eines oder mehrere des vorschlagsgemäßen Leistungsmoduls 3 kann bzw. können in der vorschlagsgemäßen Schnellladestation 1 eingesetzt werden. Auf alle Ausführungen zu der vorschlagsgemäßen Schnellladestation 1 darf insoweit verwiesen werden.

## Patentansprüche

1. Schnellladestation für Elektrofahrzeuge (2), wobei die Schnellladestation (1) mehrere Leistungsmodule (3) und mehrere Modulslots (4) aufweist, wobei die Leistungsmodule (3) im montierten Zustand in den Modulslots (4) angeordnet sind, wobei die Schnellladestation (1) eine Steuereinheit (5) aufweist, wobei die Schnellladestation (1) ein Kommunikationsnetzwerk (6) aufweist, wobei die Leistungsmodule (3) und die Steuereinheit (5) in das Kommunikationsnetzwerk (6) derart eingebunden sind, dass die Steuereinheit (5) und die Leistungsmodule (3) datentechnisch miteinander kommunizieren können, **dadurch gekennzeichnet,**
**dass** den Leistungsmodulen (3) im Zuge einer Einrichtungsroutine jeweils eine individuelle Zuordnungsvariable (7) über eine, insbesondere manuelle, Eingabeanordnung (8) zugeteilt wird und dass die Steuereinheit (5) mit den Leistungsmodulen (3) individuell auf Grundlage der jeweiligen Zuordnungsvariable (7) innerhalb des Kommunikationsnetzwerks (6) kommuniziert.

2. Schnellladestation nach Anspruch 1, **dadurch gekennzeichnet, dass** der Steuereinheit (5) im Zuge der Einrichtungsroutine die Belegung der Modulslots (4) mitgeteilt wird und dass die Zuordnungsvariablen (7) den Leistungsmodulen (3) im Zuge der Einrichtungsroutine nach einer bestimmten Zuordnungsregel, welche der Steuereinheit (5) bekannt ist oder welche der Steuereinheit (5) im Zuge der Einrichtungsroutine mitgeteilt wird, zugeteilt werden, vorzugsweise,
dass die Zuordnungsregel die relative Reihenfolge der Leistungsmodule (3) in den Modulslots (4) betrifft.

3. Schnellladestation nach Anspruch 1 oder 2, **dadurch gekennzeichnet, dass** die Steuereinheit (5) mit den Leistungsmodulen (3) individuell auf Grundlage der jeweiligen Zuordnungsvariable (7) innerhalb des Kommunikationsnetzwerks (6) kommuniziert, indem das jeweilige Leistungsmodul (3) zumindest zeitweise über die jeweilige Zuordnungsvariable (7) angesprochen wird, oder, dass die Steuereinheit (5) den Leistungsmodulen (3) jeweils eine individuelle Kennung zuordnet und dass die Kennungen der Leistungsmodule (3) mit den jeweiligen Zuordnungsvariablen (7) datentechnisch verknüpft sind und dass die Steuereinheit (5) mit den Leistungsmodulen (3) individuell auf Grundlage der jeweiligen Zuordnungsvariable (7) innerhalb des Kommunikationsnetzwerks (6) kommuniziert, indem das jeweilige Leistungsmodul (3) zumindest zeitweise über die jeweilige Kennung angesprochen wird.

4. Schnellladestation nach einem der vorhergehenden Ansprüche, **dadurch gekennzeichnet, dass** die Schnellladestation (1) eine Anzeigeanordnung (9) aufweist, über welche zumindest im Zuge der Einrichtungsroutine die Zuordnungsvariablen (7) der Leistungsmodule (3) angezeigt werden, vorzugsweise, dass die Anzeigeanordnung (9) mehrere Anzeigeeinheiten (10) aufweist, von denen jeweils eine der Anzeigeeinheiten (10) einem der Leistungsmodule (3) zugeordnet ist, weiter vorzugsweise,
dass jeweils eine der Anzeigeeinheiten (10) als Teil eines der Leistungsmodule (3) ausgebildet ist oder dass jeweils eine der Anzeigeeinheiten (10) an einem der Modulslots (4) angeordnet ist.

5. Schnellladestation nach einem der vorhergehenden Ansprüche, **dadurch gekennzeichnet, dass** die Eingabeanordnung (8) eine Eingabeeinheit (11) aufweist, welche im Zuge der Einrichtungsroutine mit den Leistungsmodulen (3), insbesondere nacheinander, verbunden wird, oder,
dass die Eingabeanordnung (8) mehrere Eingabeeinheiten (11) aufweist, von denen jeweils eine der Eingabeeinheiten (11) einem der Leistungsmodule (3) zugeordnet ist, vorzugsweise,
dass jeweils eine der Eingabeeinheiten (11) als Teil eines der Leistungsmodule (3) ausgebildet ist oder
dass jeweils eine der Eingabeeinheiten (11) an einem der Modulslots (4) angeordnet ist.

6. Schnellladestation nach einem der vorhergehenden Ansprüche, **dadurch gekennzeichnet,**
**dass** das Kommunikationsnetzwerk (6) ein Bus-System (13), insbesondere ein CAN-Bus-System, zur Kommunikation der Steuereinheit (5) und der Leistungsmodule (3) aufweist.

7. Leistungsmodul für eine Schnellladestation (1), insbesondere nach einem der vorhergehenden Ansprüche, wobei das Leistungsmodul (3) in einem Modulslot (4) der Schnellladestation (1) anordbar ist und wobei das Leistungsmodul (3) in ein Kommunikationsnetzwerk (6) der Schnellladestation (1) einbindbar ist,
**dadurch gekennzeichnet,**
**dass** dem Leistungsmodul (3) im Zuge einer Einrichtungsroutine eine individuelle Zuordnungsvariable (7) über eine, insbesondere manuelle, Eingabeanordnung (8) zuteilbar ist und dass das Leistungsmodul (3) über die Zuordnungsvariable (7) innerhalb des Kommunikationsnetzwerks (6) ansprechbar ist und dass das Leistungsmodul (3) eine Anzeigeeinheit (10) zur Anzeige der Zuordnungsvariable (7) und/oder zumindest einen Teil einer, insbesondere manuellen, Eingabeanordnung (8) zum Zuteilen der Zuordnungsvariable (7) aufweist.
